(19)

**Europäisches Patentamt**
**European Patent Office**
**Office européen des brevets**

(11)  **EP 3 705 904 A1**

(12)  # EUROPEAN PATENT APPLICATION

(43) Date of publication:
**09.09.2020  Bulletin 2020/37**

(51) Int Cl.:
**G01S 7/02** *(2006.01)*    **G01S 13/931** *(2020.01)*

(21) Application number: **20155107.4**

(22) Date of filing: **03.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2019  US 201916292432**

(71) Applicant: **Aptiv Technologies Limited**
**St. Michael (BB)**

(72) Inventors:
• **Sun, Shunqiao**
  **Calabasas, California 91302 (US)**
• **Alcalde, Carlos A.**
  **42289 Wuppertal (DE)**

(74) Representative: **Manitz Finsterwald**
**Patent- und Rechtsanwaltspartnerschaft mbB**
**Martin-Greif-Strasse 1**
**80336 München (DE)**

(54)  **REMOVING INTERFERENCE FROM SIGNALS RECEIVED BY DETECTORS INSTALLED ON A VEHICLE**

(57)    An illustrative example detector device (20) includes a plurality of receiver components (24) that are configured to receive respective signals including interference. A processor (26) is configured to identify principal components from determine a correlation of the respective signals and remove the identified principal components from the respective signals to provide an output corresponding to the respective signals without the interference.

EP 3 705 904 A1

**Description**

<u>**BACKGROUND**</u>

Advances in electronics and technology have made it possible to incorporate a variety of features on automotive vehicles. Various sensing technologies, such as RADAR and LIDAR, have been developed for detecting objects in a vicinity or pathway of a vehicle. Such systems are useful for object detection, parking assist and cruise control adjustment features, for example.

One difficulty associated with the proliferation of such automotive sensing technologies is that more signaling from more vehicles increases the likelihood of one vehicle's sensor interfering with the sensor on another vehicle. In the case of RADAR, for example, one sensor has a transmitter and a receiver. The transmitted signal or radiation has higher energy than the reflected signal that is detected at the receiver. If a transmitter on one vehicle is facing generally toward the receiver on another vehicle, the signal transmitted from the one vehicle will cause interference with any reflections from nearby targets received by that receiver.

Such interference can hinder the ability of the RADAR sensor to accurately detect one or more target objects because the interfering signal will typically have a much larger amplitude than any reflected signal detected by the receiver. It has been difficult to process such interference in a computationally efficient manner. The processing cost associated with previously proposed approaches has been too high for the type of computing device typically used for vehicle RADAR. Additionally, altering the reflected signal as a result of processing the interference can distort the results of target identification or location, which is undesirable.

<u>**SUMMARY**</u>

An illustrative example detector device includes a plurality of receiver components that are configured to receive respective signals including interference. A processor is configured to identify principal components from a correlation of the respective signals and remove the identified principal components from the respective signals to provide an output corresponding to the respective signals without the interference.

In example embodiment having one or more features of the device of the previous paragraph, the processor is configured to determine the correlation by determining a covariance matrix of samples of the respective signals.

In example embodiment having one or more features of the device of any of the previous paragraphs, the processor is configured to identify the principal components of the covariance matrix.

In example embodiment having one or more features of the device of any of the previous paragraphs, the processor is configured to identify the principal components by performing a singular value decomposition of the covariance matrix.

In example embodiment having one or more features of the device of any of the previous paragraphs, the processor is configured to remove the identified principal components by determining an orthogonal projection matrix from the singular value decomposition of the covariance matrix and applying the orthogonal projection matrix to a matrix of the respective signals.

In example embodiment having one or more features of the device of any of the previous paragraphs, the processor is configured to identify the principal components by performing a linear regression or a diagonalization of the covariance matrix.

In example embodiment having one or more features of the device of any of the previous paragraphs, the receiver components respectively comprise an antenna.

In example embodiment having one or more features of the device of any of the previous paragraphs, the received signals comprise reflected RADAR signals and the interference comprises a transmission from at least one other detector device.

An illustrative example embodiment of a method of processing signals including interference and respectively received by a plurality of receiver components includes identifying principal components of a correlation of the received signals and removing the identified principal components from the received signals to provide an output corresponding to the signals without the interference.

An example embodiment having one or more features of the method of the previous paragraph includes determining the correlation by determining a covariance matrix of samples of the respective signals.

In example embodiment having one or more features of the method of any of the previous paragraphs, identifying the principal components comprises identifying principal components of the covariance matrix.

In example embodiment having one or more features of the method of any of the previous paragraphs, identifying the principal components comprises performing a singular value decomposition of the covariance matrix.

In example embodiment having one or more features of the method of any of the previous paragraphs, removing the identified principal components comprises determining an orthogonal projection matrix from the singular value decomposition of the covariance matrix and applying the orthogonal projection matrix to a matrix of the respectively received signals.

In example embodiment having one or more features of the method of any of the previous paragraphs, identifying the principal components comprises performing a linear regression or a diagonalization of the covariance matrix.

In example embodiment having one or more features of the method of any of the previous paragraphs, the receiver components respectively comprise an antenna.

An illustrative example embodiment of a detector device includes means for receiving respective signals including interference and signal processing means for identifying principal components from a correlation of the respective signals and removing the identified principal components from the respective signals to provide an output corresponding to the respective signals without the interference.

In example embodiment having one or more features of the device of the previous paragraph, the signal processing means is further for determining the correlation by determining a covariance matrix of samples of the respective signals and the principal components are identified from the covariance matrix.

In example embodiment having one or more features of the device of any of the previous paragraphs, the signal processing means identifies the principal components by performing a singular value decomposition of the covariance matrix and the signal processing means removes the identified principal components by determining an orthogonal projection matrix from the singular value decomposition of the covariance matrix and applying the orthogonal projection matrix to a matrix of the respective signals.

In example embodiment having one or more features of the device of any of the previous paragraphs, the signal processing means identifies the principal components by performing a linear regression or a diagonalization of the covariance matrix.

In example embodiment having one or more features of the device of any of the previous paragraphs, the means for receiving comprises a plurality of antennas and the signal processing means comprises a processor.

Various features and advantages of at least one disclosed example embodiment will become apparent to those skilled in the art from the following detailed description. The drawings that accompany the detailed description can be briefly described as follows.

## BRIEF DESCRIPTION OF THE DRAWINGS

Figure 1 schematically illustrates a vehicle including a detector device designed according to an embodiment of this invention.
Figure 2 schematically illustrates interfering signals.
Figure 3 schematically illustrates an example received signal characteristic including interference.
Figure 4 is a flow chart diagram summarizing an example approach to removing interference from received signals.

## DETAILED DESCRIPTION

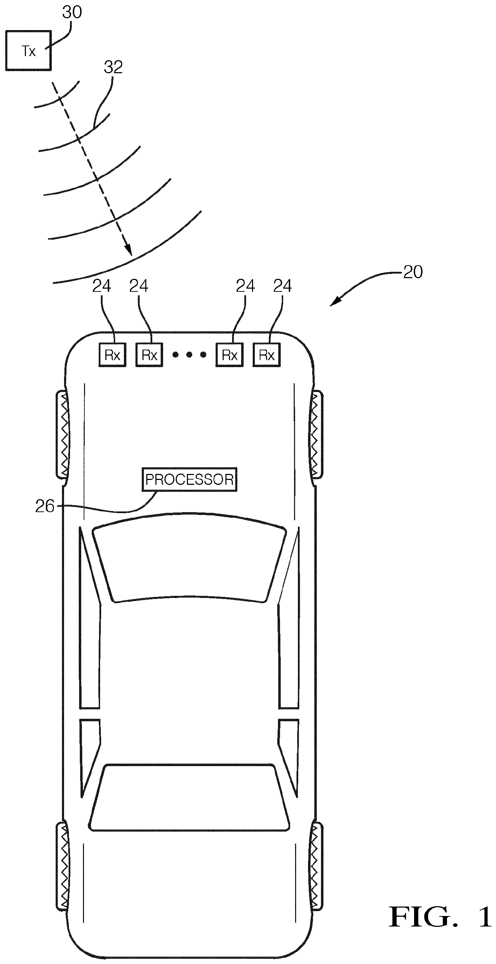

Figure 1 schematically illustrates a detector device 20 supported on a vehicle 22. The example detector device is useful for detecting objects in a pathway or vicinity of the vehicle 22 for one or more purposes. Example uses of the detector device include adaptive cruise control, autonomous vehicle control and driver assistance. In some embodiments, the detector device 20 uses RADAR technology and in other embodiments the detector device 20 uses LIDAR technology.

The detector device 20 includes a plurality of receiver components 24 that detect radiation directed toward the receiver components 24. In some examples, the receiver components 24 each include an antenna. Although not illustrated, the detector device 20 may include a transmitter associated with each receiver component 24. The transmitter transmits a signal or wave away from the vehicle 22 and any reflected signals or waves that reflect off of objects in the path of the radiation returns toward the vehicle 22 where it is detected by the receiver components 24. A processor 26 includes known capabilities for processing received signals for detecting or identifying objects in the pathway or vicinity of the vehicle 22. For example, the processor 26 is configured or suitably programmed to identify or determine range, range rate, and angle information based on received signals.

As schematically shown in Figure 1, a transmitter 30 of another device, which may be supported on another vehicle for example, emits a signal or wave schematically shown at 32. The transmission from the transmitter 30 is directed generally toward the receiver components 24. When that signal or wave 32 is received by the receiver components 24, it typically has a much higher amplitude or signal strength compared to signals or waves that are reflected off of target objects. Since the signal 32 from the transmitter 30 may be received at the same time and in the same frequency band as reflections off of target objects, that signal 32 causes interference and can hinder the ability of the processor 26 to make appropriate determinations regarding target objects.

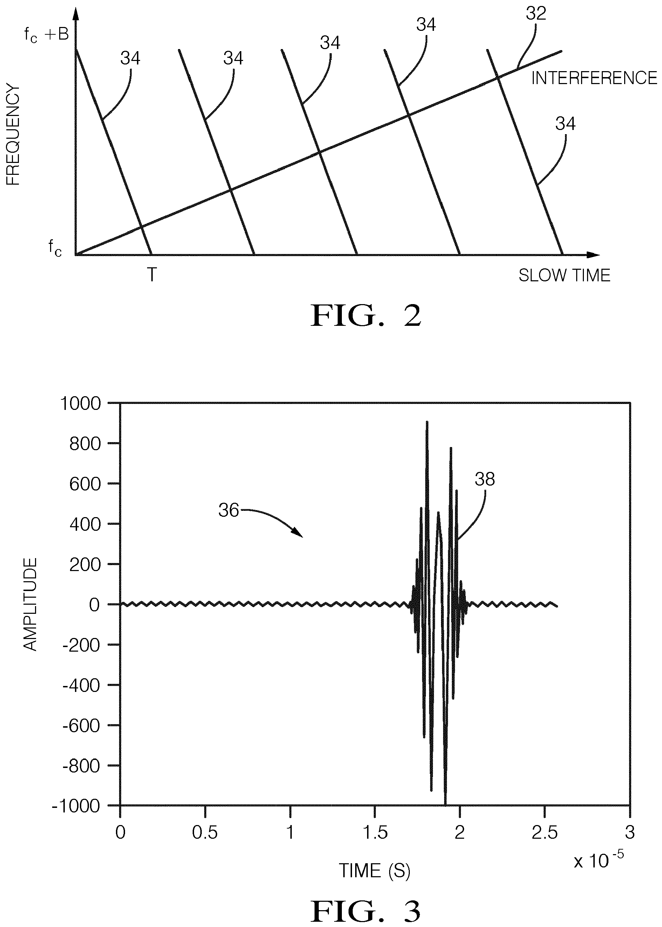

Figures 2 and 3 illustrate an example scenario in which an interfering wave or signal 32 coincides with received signals 34. The resulting received signal at a receiver component 24 may be represented by the plot 36 in Figure 3. As shown at 38, the interference caused by the signal or wave 32 has a much larger amplitude than a remainder of the received signal.

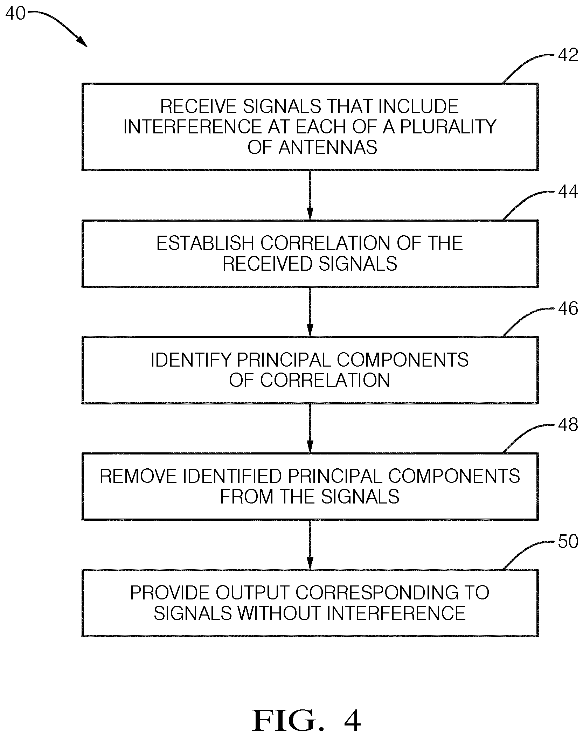

The processor 26 is configured or suitably programmed to effectively remove the interference from the received signal so that the received signal may be processed for identifying or detecting one or more target objects. Figure 4 is a flowchart diagram 40 that summarizes an example approach for removing the interference from the received signals. At 42, signals or waves are received at each of the receiver components 24. Each of those received signals includes interference. In some example embodiments, four antennas receive one or more signals while in other embodiments, there are eight antennas that receive signals including interference.

The example of Figure 4 includes establishing a correlation of the received signals at 44. In an example embodiment, the correlation is determined or established by determining a covariance matrix of the received signals that include interference. In some embodiments, a time series sample is obtained from each of the receiver component antennas and those samples are considered the received signals for purposes of establishing the correlation.

In an example embodiment that uses RADAR signaling, during one pulse or chirp, the received samples that include interference can be denoted as $X \in C^{M_r \times N}$, where N is the number of corrupted samples including interference and $M_r$ is the number of receive antennas. $X = X_R + X_I$, where $X_R$ are the reflected signals from a target object and $X_I$ are the interference signals. The covariance matrix determined at 44 for establishing the correlation of the received signals can be represented as R $= XX^H$. Such a covariance matrix represents all possible correlations of the data corresponding to the received signals.

At 46, principal components of the correlation are determined, for example, by performing a singular value decomposition of the covariance matrix R. Other example embodiments include using a linear regression or a diagonalization of the covariance matrix for identifying the principal components, which correspond to the interference. The singular value decomposition SVD(R) can be denoted as [U, $\Sigma$, V]. Identifying the principal components of the correlation of the received signals identifies or isolates the interference signal from the remaining data of the received signals, which is the radiation reflected from one or more target objects. Given that the interference typically has a much larger amplitude as shown at 38 in Figure 4, the principal component identification approach isolates the interference from a remainder of the signal.

At 48, the identified principal components are removed from the signals. An output corresponding to the signals without the interference is provided at 50. Removing the identified principal components is accomplished in one example embodiment using an orthogonal projection matrix to effectively replace the interference with the underlying data of the received signals. The output corresponding to the signals without interference can be represented by $\widehat{X_R} = P_\perp X,$ where $P_\perp$ is the orthogonal projection matrix $P_\perp = I - U(:,1) \, {}^*U(:,1)^H$ where I is the identity matrix. With this approach, the interference of the received signals is represented by singular vectors corresponding to the maximal singular value.

The output provided at 50 can then be used in known RADAR range and Doppler signal processing for angle finding, object detection or object identification, for example.

One feature of the example technique is that it only requires a relatively small computation budget so that the processing is quick and can be accomplished by a variety of inexpensive processors. There is no need for heavy or complex computation for purposes of isolating and removing the interference from the received signals. For example, determining a covariance matrix and a singular value matrix decomposition involves relatively light computation.

One aspect of the example technique is that it takes advantage of the fact that an interfering signal such as the signal or wave 32 shown in Figure 1 will be received by all of the antennas from the same angle, which allows for a principal component analysis to accurately isolate the interference from a remainder of the signal data.

The disclosed example technique effectively characterizes an interferer, such as the transmitter 30 shown in Figure 1, in a time series using array samples without requiring array calibration. The orthogonal projection based method is efficient for mitigating the interference in the time series of signal samples. There is no need to estimate an amplitude or phase of the interference. Another feature of the disclosed example technique is that the output corresponding to the signals without interference will not include artifacts that would otherwise have an impact on the two dimensional fast Fourier transform (FFT) spectrum. Accordingly, interference can be efficiently and effectively removed from received signals allowing for known signal processing for object detection or identification to proceed.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

**Claims**

1. A detector device (20), comprising:

   means for receiving (24) respective signals including interference; and
   signal processing means (26) for identifying principal components from a correlation of the respective signals and removing the identified principal components from the respective signals to provide an output corresponding to the respective signals without the interference.

2. The device (20) of claim 1, wherein
the signal processing means (26) is further for determining the correlation by determining a covariance matrix of samples of the respective signals; and
the principal components are identified from the covariance matrix.

3. The device (20) of claim 2, wherein

the signal processing means (26) identifies the principal components by performing a singular value decomposition of the covariance matrix; and
the signal processing means (26) removes the identified principal components by determining an orthogonal projection matrix from the singular value decomposition of the covariance matrix and applying the orthogonal projection matrix to a matrix of the respective signals.

**4.** The device (20) of claim 2, wherein the signal processing means (26) identifies the principal components by performing a linear regression or a diagonalization of the covariance matrix.

**5.** The device (20) of any of the preceding claims, wherein
the means for receiving (24) comprises a plurality of antennas; and
the signal processing means (26) comprises a processor.

**6.** The device (20) of any of the preceding claims, wherein the respective signals comprise reflected RADAR signals and the interference comprises a transmission from at least one other detector device (20).

**7.** A method of processing signals respectively received by a plurality of receiver components (24), the received signals including interference, the method comprising:

identifying principal components of a correlation of the received signals; and
removing the identified principal components from the received signals to provide an output corresponding to the signals without the interference.

**8.** The method of claim 7, comprising determining the correlation by determining a covariance matrix of samples of the respective signals.

**9.** The method of claim 8, wherein identifying the principal components comprises identifying principal components of the covariance matrix.

**10.** The method of claim 9, wherein identifying the principal components comprises performing a singular value decomposition of the covariance matrix.

**11.** The method of claim 10, wherein removing the identified principal components comprises
determining an orthogonal projection matrix from the singular value decomposition of the covariance matrix; and
applying the orthogonal projection matrix to a matrix of the respectively received signals.

**13.** The method of claim 9, wherein identifying the principal components comprises performing a linear regression or a diagonalization of the covariance matrix.

**14.** The method of any of claims 7 - 13, wherein the receiver components (24) respectively comprise an antenna.

FIG. 1

FIG. 2

FIG. 3

40

42

```
┌──────────────────────────────────────┐
│      RECEIVE SIGNALS THAT INCLUDE     │
│  INTERFERENCE AT EACH OF A PLURALITY  │
│             OF ANTENNAS               │
└──────────────────────────────────────┘
```

44

```
┌──────────────────────────────────────┐
│       ESTABLISH CORRELATION OF THE    │
│            RECEIVED SIGNALS           │
└──────────────────────────────────────┘
```

46

```
┌──────────────────────────────────────┐
│      IDENTIFY PRINCIPAL COMPONENTS    │
│             OF CORRELATION            │
└──────────────────────────────────────┘
```

48

```
┌──────────────────────────────────────┐
│  REMOVE IDENTIFIED PRINCIPAL COMPONENTS│
│             FROM THE SIGNALS          │
└──────────────────────────────────────┘
```

50

```
┌──────────────────────────────────────┐
│    PROVIDE OUTPUT CORRESPONDING TO    │
│      SIGNALS WITHOUT INTERFERENCE     │
└──────────────────────────────────────┘
```

FIG. 4

Europäisches
Patentamt

European
Patent Office

Office européen
des brevets

**EUROPEAN SEARCH REPORT**

Application Number

EP 20 15 5107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/341814 A1 (NGUYEN LAM H [US] ET AL) 24 November 2016 (2016-11-24) * abstract * * paragraphs [0014] - [0020], [0108], [0160], [0194] * ----- | 1-11,13, 14 | INV. G01S7/02 G01S13/931 |
| X | CN 105 116 388 A (UNIV XIDIAN) 2 December 2015 (2015-12-02) * abstract * ----- | 1-11,13, 14 | |

TECHNICAL FIELDS SEARCHED (IPC)

G01S

The present search report has been drawn up for all claims

| Place of search | Date of completion of the search | Examiner |
|---|---|---|
| Munich | 26 May 2020 | Alberga, Vito |

**EP 3 705 904 A1**

**ANNEX TO THE EUROPEAN SEARCH REPORT
ON EUROPEAN PATENT APPLICATION NO.**

EP 20 15 5107

This annex lists the patent family members relating to the patent documents cited in  the above-mentioned European search report.
The members are as contained in the European Patent Office EDP file on
The European Patent Office is in no way liable for these particulars which are merely given for the purpose of information.

26-05-2020

| Patent document cited in search report | Publication date | Patent family member(s) | Publication date |
|---|---|---|---|
| US 2016341814    A1 | 24-11-2016 | NONE | |
| CN 105116388    A | 02-12-2015 | NONE | |

EPO FORM P0459

For more details about this annex : see Official Journal of the European Patent Office, No. 12/82